# EUROPEAN PATENT SPECIFICATION

(11) **EP 3 743 868 B1**
(45) Date of publication and mention of the grant of the patent: **06.12.2023**
(21) Application number: 18902770.9
(22) Date of filing: 28.11.2018
(51) Int. Cl.: G06Q 20/00, G06Q 20/22, G06Q 20/40, G06Q 20/10

(54) **METHOD AND SYSTEM FOR SHARED PAYMENTS WITH TOKENIZED AND DIGITIZED PAYMENT CARDS**
VERFAHREN UND SYSTEM FÜR GEMEINSAME ZAHLUNGEN MIT TOKENISIERTEN UND DIGITALISIERTEN ZAHLKARTEN
PROCÉDÉ ET SYSTÈME POUR DES PAIEMENTS PARTAGÉS AVEC DES CARTES DE PAIEMENT SEGMENTÉS ET NUMÉRISÉS

(30) Priority: 24.01.2018 US 201815878765
(43) Date of publication of application: 02.12.2020
(73) Proprietor: Mastercard International Incorporated, Purchase, NY 10577 (US)
(72) Inventor: DAYAL, Gaurav, Vadodara, Gujarat 390004 (IN); PATEL, Arpit, Vadodara, Gujarat 391410 (IN); SHAH, Hemal, Baroda, Gujarat 390019 (IN); NAIK, Rahul Narendra, Vadodara, Gujarat 390004 (IN)
(74) Representative: Barker Brettell LLP
(86) International application number: PCT/US2018/062703
(87) International publication number: WO 2019/147336

(56) References cited:
- WO-A1-2013/142917
- WO-A1-2017/218138
- US-A1- 2009 164 327
- US-A1- 2009 299 869
- US-A1- 2010 121 745
- US-A1- 2010 121 745
- US-A1- 2014 172 704
- US-A1- 2017 061 523
- US-A1- 2017 337 546
- US-A1- 2017 364 914
- US-B2- 7 225 156

## Description

### FIELD

The present disclosure relates to a method for processing shared payments for a transaction and a system for processing shared payments for a transaction.

### BACKGROUND

As long as people have been making payments, people have sought after ways to make sharing payments viable. When using physical currency, a group of individuals will typically utilize various denominations of the currency to accomplish the desired splitting of the payment transaction. Some merchants even offer the ability to a transaction to be split into multiple transactions, where, instead of one transaction being conducted for an amount, several transactions may be conducted where each is for a portion of the initial amount.

While such a process may be useful for electronic payment transactions, it requires a merchant point of sale system to be specifically programmed to be able to split transactions to create multiple transactions therefrom. In addition, it can be time consuming, as the merchant must then collect payment credentials from each individual and run separate authorization processes for each of the transactions. Thus, there is a need for a technological solution where a single payment transaction may be initiated by the merchant point of sale system that can still accomplish shared payment using multiple transaction accounts.

US 2017/337546 A1 discloses a method for distributing credentials to a linked electronic wallet.

US 2009/164327 A1 discloses a point of sale (POS) device configured to locate a payment system and transmit a payment authorization request from a remote location to a payment system, either directly, or via a payment system directory and/or a SSL Gateway.

US 2010/121745 A1 discloses systems and methods for facilitating sharing of expenses over a network.

US 2017/364914 A1 discloses a system for generating a master token to be associated with a set of tokens.

US 7 225 156 B2 discloses methods, systems, and software for the processing of payments from financial accounts, particularly credit and debit card payments made from consumers to merchants in online transactions.

WO 2013/142917 A1 discloses a method for performing a payment from a payer to a payee.

US 2009/299869 A1 discloses a system for processing sales transactions.

WO 2017/218138 A1 discloses a system for generating a master token to be associated with a set of tokens.

US 2014/172704 A1 discloses methods and systems for establishing, managing or using a shared pool between a group of users in connection with one or more common transactions

US 2010/121745 A1 discloses systems and methods for facilitating sharing of expenses over a network which utilise a first component adapted to communicate with members of a user group via a client device over the network and a merchant via a merchant device over the network.

US 2017/061523 A1 discloses systems, devices, methods, and software for shared transactions.

### SUMMARY

Aspects of the invention are set out according to the appended independent claims. Embodiments of the invention are set out according to the appended dependent claims.

### BRIEF DESCRIPTION OF THE DRAWING FIGURES

The scope of the present disclosure is best understood from the following detailed description when read in conjunction with the accompanying drawings. Included in the drawings are the following figures:
FIG. 1 is a block diagram illustrating a high level system architecture for processing a shared payment transaction in accordance with exemplary embodiments.
FIG. 2 is a block diagram illustrating the processing server of the system of FIG. 1 for processing shared payments for a transaction in accordance with exemplary embodiments.
FIG. 3 is a flow diagram illustrating a first process for shared payment transactions using the system of FIG. 1 in accordance with exemplary embodiments.
FIG. 4 is a flow diagram illustrating a second process for shared payment transactions using the system of FIG. 1 in accordance with exemplary embodiments.
FIG. 5 is a flow chart illustrating an exemplary method for processing shared payments for a transaction in accordance with exemplary embodiments.
FIG. 6 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

### Glossary of Terms

Payment Network - A system or network used for the transfer of money via the use of cash-substitutes for thousands, millions, and even billions of transactions during a given period. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, transaction accounts, etc. Examples of networks or systems configured to perform as payment networks include those operated by MasterCard°, VISA^{®}, Discover^{®}, American Express°, PayPal^{®}, etc. Use of the term "payment network" herein may refer to both the payment network as an entity, and the physical payment network, such as the equipment, hardware, and software comprising the payment network.

Payment Rails - Infrastructure associated with a payment network used in the processing of payment transactions and the communication of transaction messages and other similar data between the payment network and other entities interconnected with the payment network that handles thousands, millions, and even billions of transactions during a given period. The payment rails may be comprised of the hardware used to establish the payment network and the interconnections between the payment network and other associated entities, such as financial institutions, gateway processors, etc. In some instances, payment rails may also be affected by software, such as via special programming of the communication hardware and devices that comprise the payment rails. For example, the payment rails may include specifically configured computing devices that are specially configured for the routing of transaction messages, which may be specially formatted data messages that are electronically transmitted via the payment rails, as discussed in more detail below.

Transaction Account - A financial account that may be used to fund a transaction, such as a checking account, savings account, credit account, virtual payment account, etc. A transaction account may be associated with a consumer, which may be any suitable type of entity associated with a payment account, which may include a person, family, company, corporation, governmental entity, etc. In some instances, a transaction account may be virtual, such as those accounts operated by PayPal^{®}, etc.

Merchant - An entity that provides products (e.g., goods and/or services) for purchase by another entity, such as a consumer or another merchant. A merchant may be a consumer, a retailer, a wholesaler, a manufacturer, or any other type of entity that may provide products for purchase as will be apparent to persons having skill in the relevant art. In some instances, a merchant may have special knowledge in the goods and/or services provided for purchase. In other instances, a merchant may not have or require any special knowledge in offered products. In some embodiments, an entity involved in a single transaction may be considered a merchant. In some instances, as used herein, the term "merchant" may refer to an apparatus or device of a merchant entity.

Issuer - An entity that establishes (e.g., opens) a letter or line of credit in favor of a beneficiary, and honors drafts drawn by the beneficiary against the amount specified in the letter or line of credit. In many instances, the issuer may be a bank or other financial institution authorized to open lines of credit. In some instances, any entity that may extend a line of credit to a beneficiary may be considered an issuer. The line of credit opened by the issuer may be represented in the form of a payment account, and may be drawn on by the beneficiary via the use of a payment card. An issuer may also offer additional types of payment accounts to consumers as will be apparent to persons having skill in the relevant art, such as debit accounts, prepaid accounts, electronic wallet accounts, savings accounts, checking accounts, etc., and may provide consumers with physical or non-physical means for accessing and/or utilizing such an account, such as debit cards, prepaid cards, automated teller machine cards, electronic wallets, checks, etc.

Payment Transaction - A transaction between two entities in which money or other financial benefit is exchanged from one entity to the other. The payment transaction may be a transfer of funds, for the purchase of goods or services, for the repayment of debt, or for any other exchange of financial benefit as will be apparent to persons having skill in the relevant art. In some instances, payment transaction may refer to transactions funded via a payment card and/or payment account, such as credit card transactions. Such payment transactions may be processed via an issuer, payment network, and acquirer. The process for processing such a payment transaction may include at least one of authorization, batching, clearing, settlement, and funding. Authorization may include the furnishing of payment details by the consumer to a merchant, the submitting of transaction details (e.g., including the payment details) from the merchant to their acquirer, and the verification of payment details with the issuer of the consumer's payment account used to fund the transaction. Batching may refer to the storing of an authorized transaction in a batch with other authorized transactions for distribution to an acquirer. Clearing may include the sending of batched transactions from the acquirer to a payment network for processing. Settlement may include the debiting of the issuer by the payment network for transactions involving beneficiaries of the issuer. In some instances, the issuer may pay the acquirer via the payment network. In other instances, the issuer may pay the acquirer directly. Funding may include payment to the merchant from the acquirer for the payment transactions that have been cleared and settled. It will be apparent to persons having skill in the relevant art that the order and/or categorization of the steps discussed above performed as part of payment transaction processing.

### System for Processing Shared Payment Transactions

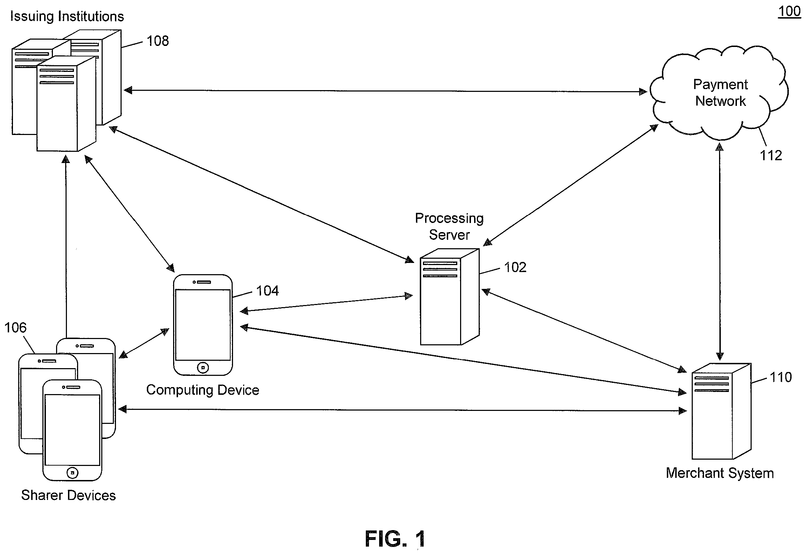

FIG. 1 illustrates a system 100 for the processing of a payment transaction as a shared payment transaction where multiple sets of payment credentials may be used to process multiple payments for a single, initially submitted payment transaction.

The system 100 may include a processing server 102. The processing server 102, discussed in more detail below, may be configured to process shared payments for a payment transaction to be funded by multiple transaction accounts. In the system 100, a plurality of consumers may wish to participate in a payment transaction for which the payment thereof may be shared across each of the consumers. The plurality of consumers may identify a single consumer, also referred to herein as the "primary consumer," that will initiate the payment transaction with a merchant, from which the processing server 102 will process shared payments for funding by each of the consumers in the group. As discussed herein, the additional consumers in the group (e.g., separate from the primary consumer) may be referred to as "participants," "participant consumers," "sharers," or "sharer consumers."

In the system 100, the primary consumer may possess a computing device 104. The computing device 104 may be any type of device suitable for performing the functions discussed herein, such as a cellular phone, smart phone, smart watch, wearable computing device, implantable computing device, tablet computer, notebook computer, laptop computer, desktop computer, smart television, etc. The computing device 104 may be provisioned payment credentials for use in funding a payment transaction by an issuing institution 108. The issuing institution 108 may be a financial institution, such as an issuing bank, or other entity configured to issue transaction accounts that may be used to fund an electronic payment transaction. The issuing institution 108 may issue a transaction account to the primary consumer, and may provision payment credentials associated with that transaction account to the computing device 104 of the primary consumer for presentation to a merchant system 110 in order to fund a payment transaction with the corresponding transaction account. The payment credentials may include any data that may be necessarily or useful in an electronic payment transaction for processing thereof and funding by the related transaction account, including, for instance, a primary account number, name, expiration date, security code, transaction counter, and one or more payment cryptograms. As discussed herein, "payment credentials" may refer to any such data that may be used in the identification of a transaction account for use in funding a payment transaction, such as may include digital tokens.

Each of the participants may also possess a computing device, referred to herein as sharer devices 106. Each sharer device 106 may also be provisioned payment credentials from an issuing institution 108. In some embodiments, a single issuing institution 108 may issue payment credentials to the computing device 104 and each of the sharer devices 106. In other embodiments, a plurality of different issuing institutions 108 may issue payment credentials for use by the computing device 104 and the sharer devices 106. In some cases, the system 100 may include a single sharer device 106. In other cases, multiple sharer devices 106 may be used. In some instances, limits may be set on the number of sharer devices 106 that may participate in a shared payment transaction using the methods and systems discussed herein. Such limits may be set by the processing server 102, the issuing institutions 108, or may be based on data requirements and/or restrictions related to transaction messaging, as discussed in more detail below.

The primary consumer and each of the participants may agree to conduct a payment transaction where payment of the payment transaction will be shared among each of the participants, including the primary consumer. The primary consumer may initiate a payment transaction at a merchant using the computing device 104 by electronically transmitting their payment credentials (e.g., provisioned to the computing device 104) to a merchant system 110, such as a point of sale system, or other computing system configured to perform functions related to the initiation and processing of an electronic payment transaction. The payment credentials may be transmitted to the merchant system 110 using any suitable method. For instance, the computing device 104 may electronically transmit the payment credentials via near field communication, Bluetooth, radio frequency, infrared, or other communication medium, may display a machine-readable code encoded with the payment credentials for reading by the merchant system 110, etc. In addition to the first set of payment credentials (e.g., associated with the primary consumer's transaction account) being transmitted to the merchant system 110, the merchant system 110 may also be informed that the payment transaction is to be processed as a shared payment transaction. In embodiments, the computing device 104 transmits such an indication to the merchant system 110 with the first set of payment credentials. In other examples, the merchant system 110 may receive such an indication via an input device interfaced therewith, such as may be input by an employee of the merchant or the primary consumer.

The merchant system 110 may submit an authorization request for the payment transaction. In some embodiments, the merchant system 110 may generate and submit the authorization request directly. In other embodiments, the merchant system 110 may supply transaction data for the payment transaction to one or more intermediate entities, such as an acquiring institution or gateway processor, which may format the transaction data in an authorization request and submit the authorization request on behalf of the merchant system 110. The authorization request may be submitted to the processing server 102, either directly or through a payment network 112. In latter instances, the authorization request may be submitted to the payment network 112 via payment rails associated therewith, who may then route the authorization request to the processing server 102 (e.g., based on the indication that the transaction is to be a shared payment transaction), which may utilize the payment rails associated with the payment network 112. In some embodiments, the processing server 102 may be a part of the payment network 112.

The authorization request may be a transaction message that includes a message type indicator indicative of the message being an authorization request. A transaction message may be a specially formatted data message that is formatted according to one or more standards governing the interchange of financial transaction messages, such as the International Organization of Standardization's ISO 8583 or ISO 20022 standards. A transaction message may include a message type indicator as well as a plurality of data elements, where each data element is configured to store data according to the applicable standard(s). In some cases, a transaction message may also include one or more bitmaps, which may indicate the data elements included in the transaction message and the data stored therein. In the system 100, the merchant system 110 (e.g., or other entity on behalf of the merchant system 110) may submit an authorization request that is routed to the processing server 102 that includes a plurality of data elements including at least a first data element configured to store a transaction amount and a second data element configured to store the first set of payment credentials supplied by the computing device 104. Additional data elements may be used to store additional transaction data, which may include, for instance, transaction time, transaction date, currency type, merchant identifier, merchant category code, merchant data, product data, point of sale data, offer data, reward data, loyalty data, etc.

In embodiments, the authorization request includes a data element configured to store the indication that the payment transaction is a shared payment transaction. In some such embodiments, the data element may be indicated in the applicable standard(s) as being reserved for private use. In other embodiments, the processing server 102 may be configured to identify that the authorization request corresponds to a shared payment transaction based on the first set of payment credentials. For instance, the primary consumer may, using the computing device 104, submit a notification to the processing server 102 prior to initiating the payment transaction that indicates that the next, or a specified, payment transaction is to be treated as a shared payment transaction.

The processing server 102 may receive the authorization request and identify that the payment transaction is to be processed as a shared payment transaction. The processing server 102 may then identify the additional sets of payment credentials that correspond to the additional transaction accounts that are to be used to share funding of the payment transaction. In a first embodiment, the additional sets of payment credentials may be stored in one or more additional data elements included in the received authorization request. In such an embodiment, the primary consumer and the participants may agree on the primary consumer initiating the payment transaction with the computing device 104. Each of the participants may, using their respective sharer devices 106, share their payment credentials with the computing device 104, where the payment credentials may be electronically transmitted to the computing device 104 using any suitable communication method. The computing device 104 may then electronically transmit the additional sets of payment credentials to the merchant system 110, along with the first set of payment credentials. The merchant system 110 (e.g., or other entity acting on behalf of the merchant system 110) may store the additional sets of payment credentials in additional data elements included in the authorization request that is submitted to the payment network 112 and routed to the processing server 102. In some cases, the additional data elements may be reserved for private use in the applicable standard(s).

In a second embodiment, the additional sets of payment credentials may be supplied directly to the processing server 102 by the computing device 104. In such an embodiment, the computing device 104 may receive the additional sets of payment credentials from the sharer devices 106, and may electronically transmit the additional sets of payment credentials to the processing server 102. In some instances, each of the sharer devices 106 may electronically transmit their respective payment credentials directly to the processing server 102. In such instances, the transmission may reference the computing device 104, the first set of payment credentials, its associated transaction account, or some identifier that may be used by the processing server 102 to match which sets of payment credentials are to be applied to a specific payment transaction. For instance, the computing device 104 may register its first set of payment credentials for an upcoming payment transaction to be a shared payment transaction, and may be provided with a transaction identifier (e.g., a random number or other type of suitable value) by the processing server 102. The computing device 104 may provide this transaction identifier to each of the sharer devices 106, which may include it in submissions made to the processing server 102.

In a third embodiment, the computing device 104 (e.g., and sharer devices 106, as applicable) may provide the processing server 102 with identification information for each of the transaction accounts to be used in the shared payment transaction. In such an embodiment, the processing server 102 may be in possession of the payment credentials associated with each transaction account, or may request the payment credentials from the respective issuing institutions 108 using the identification information. The identification information may include, for instance, a username, account number, digital token, authentication data, and/or other information that may be used by the issuing institution 108 to identify the transaction account and, if necessary, perform authentication to prevent fraud or misuse. The issuing institution 108 may then provide the payment credentials to the processing server 102.

Once the processing server 102 has identified each of the additional sets of payment credentials that are to be used to share funding of the payment transaction with the first set of payment credentials, the processing server 102 may generate an additional authorization request for each of the additional sets of payment credentials. The additional authorization requests may include the same data as included in the initial authorization request, but use the respective additional set of payment credentials in place of the first set of payment credentials in the respective data element. In addition, the transaction amount in each of the authorization requests may be replaced by a separate amount, where the separate amount is based on the total number of sets of payment credentials be used to share funding. For instance, the separate amount may be equal for each of the authorization requests and total up to the initial transaction amount. In some cases, the separate amounts may vary based on the desires of the participants. In such cases, the separate amounts may be specified in the transaction message or in submissions from the computing device 104 and/or sharer devices 106. For instance, each of the participants may agree on a specific funding scheme, which may be used by the processing server 102 when generating the additional authorization requests.

The processing server 102 may submit each of the additional authorization requests, as well as the modified initial authorization request (e.g., using a separate amount in place of the transaction amount) for processing using traditional methods and systems. In some instances, the processing server 102 may submit the authorization requests directly to the respective issuing institutions 108 (e.g., based on the payment credentials included therein), which may be submitted via payment rails associated with the payment network 112. In other instances, the processing server 102 may submit the authorization requests to the payment network 112 via the payment rails associated therewith for routing to the respective issuing institutions 108. Each of the issuing institutions 108 may approve or deny the respective authorization request using traditional methods and systems and return an authorization response to the processing server 102 (e.g., via the payment network 112, if applicable).

An authorization response may be a transaction message where the message type indicator indicates that the transaction message is an authorization response. In some cases, the authorization response may be a modification of the corresponding authorization request. In other cases, the authorization response may be a separately generated transaction message. The authorization response may include an additional data element configured to store a response code, where the response code indicates if the payment transaction is approved or denied, and may further indicate a reasoning thereof (e.g., a denied payment transaction may have a reason code for denial due to insufficient credit). The processing server 102 may accordingly receive an authorization response for each of the additional authorization requests as well as the initial authorization request.

Once the authorization responses are received, the processing server 102 may forward the authorization response for the initial authorization request to the merchant system 110. In some cases, the amount in the authorization response may be modified from the separate amount to the initial transaction amount, as may be required by the merchant system 110 for processing (e.g., so that the authorization is not treated as a partial authorization for only the separate amount). In some embodiments, the processing server 102 may forward all of the authorization responses to the merchant system 110. In some cases, the processing server 102 may be configured to electronically transmit notifications to each of the sharer devices 106 regarding the approval or denial of the respective authorization request. The merchant system 110 may receive the authorization response from the processing server 102 (e.g., directly or via the payment network 112 and/or any additional intermediate entities) and may then finalize the payment transaction, such as by furnishing the participants with the transacted-for goods or services.

In some embodiments, the payment transaction may be prevented if a single authorization response indicates denial. In such embodiments, the processing server 102 may be configured to modify the authorization response for the initial authorization request to include a response code indicating denial of the payment transaction. In some such embodiments, the response code may be the response code included in the denied authorization request. In other embodiments, the authorization response may have the transaction amount modified to be the total amount of approved authorization responses, where the authorization response provided to the merchant system 110 may be a partial authorization for that amount (e.g., which may be the total transaction amount less than the separate amount(s) that were denied). In such an embodiment, the merchant system 110 may decide to accept or deny the partial authorization, or may request additional funding from the participants to account for any difference. In some cases, the treatment of the shared payment transaction when at least one denial is received may be based on preferences of the issuing institutions 108, participants, or the merchant system 110.

The methods and systems discussed herein enable a plurality of consumers to share payment for a payment transaction through a single authorization request being submitted by a merchant system 110. The result is that a merchant system 110 and issuing institutions 108 may facilitate shared payments by consumers with little to no modification required to legacy systems, by use of the processing server 102 being specifically configured as indicated herein. By using the single initial authorization request and generating separate authorization requests as necessary during the authorization process, merchant systems 110 are not required to gather multiple sets of payment credentials or submit separate authorization requests, which can increase efficiency and processing speed for the payment transactions, while minimizing impact on merchant systems 110, consumers, and merchant employees. Thus, the methods and systems discussed herein provide for significant technological improvements over traditional methods for sharing payments.

### Processing Server

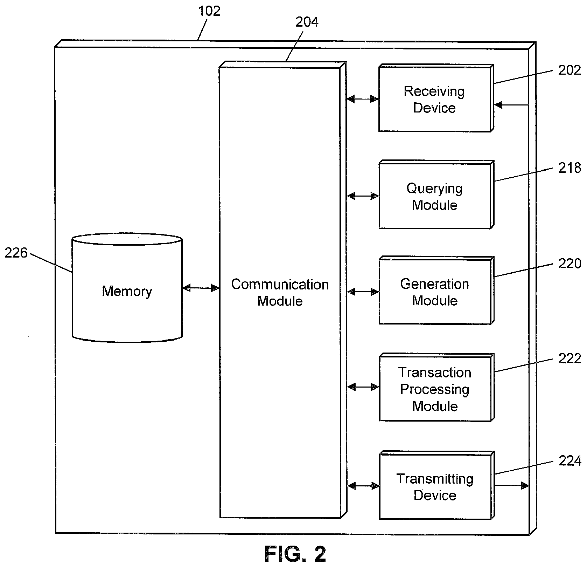

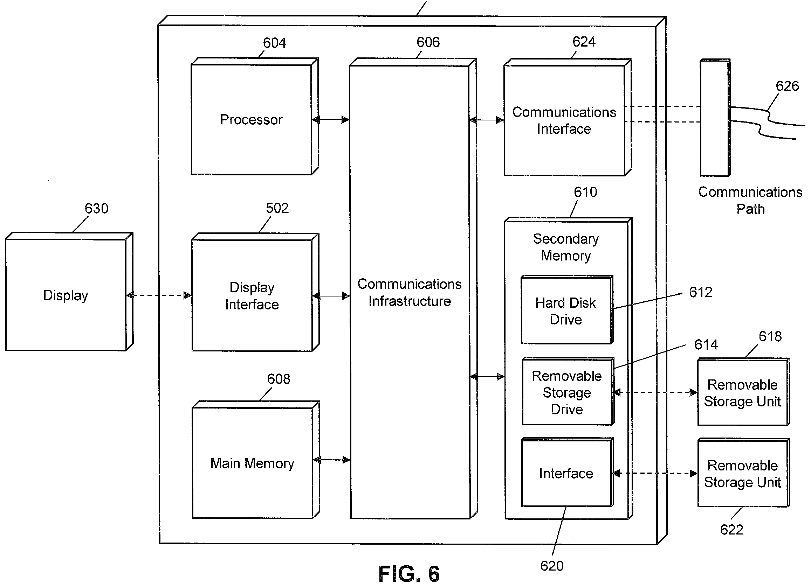

FIG. 2 illustrates an embodiment of a processing server 102 in the system 100. It will be apparent to persons having skill in the relevant art that the embodiment of the processing server 102 illustrated in FIG. 2 is provided as illustration only and may not be exhaustive to all possible configurations of the processing server 102 suitable for performing the functions as discussed herein. For example, the computer system 600 illustrated in FIG. 6 and discussed in more detail below may be a suitable configuration of the processing server 102.

The processing server 102 may include a receiving device 202. The receiving device 202 may be configured to receive data over one or more networks via one or more network protocols. In some instances, the receiving device 202 may be configured to receive data from computing devices 106, issuing institutions 108, merchant systems 110, payment networks 112, and other systems and entities via one or more communication methods, such as radio frequency, local area networks, wireless area networks, cellular communication networks, Bluetooth, the Internet, etc. In some embodiments, the receiving device 202 may be comprised of multiple devices, such as different receiving devices for receiving data over different networks, such as a first receiving device for receiving data over a local area network and a second receiving device for receiving data via the Internet. The receiving device 202 may receive electronically transmitted data signals, where data may be superimposed or otherwise encoded on the data signal and decoded, parsed, read, or otherwise obtained via receipt of the data signal by the receiving device 202. In some instances, the receiving device 202 may include a parsing module for parsing the received data signal to obtain the data superimposed thereon. For example, the receiving device 202 may include a parser program configured to receive and transform the received data signal into usable input for the functions performed by the processing device to carry out the methods and systems described herein.

The receiving device 202 may be configured to receive data signals electronically transmitted by computing devices 104, sharer devices 106, and issuing institutions 108 that may be superimposed or otherwise encoded with sets of payment credentials, and may also include identification information associated with a transaction for association of the payment credential therewith. The receiving device 202 may also be configured to receive data signals electronically transmitted by issuing institutions 108, merchant systems 110, and payment networks 112, which may be superimposed or otherwise encoded with transaction messages including authorization requests and responses for a shared payment transaction.

The processing server 102 may also include a communication module 204. The communication module 204 may be configured to transmit data between modules, engines, databases, memories, and other components of the processing server 102 for use in performing the functions discussed herein. The communication module 204 may be comprised of one or more communication types and utilize various communication methods for communications within a computing device. For example, the communication module 204 may be comprised of a bus, contact pin connectors, wires, etc. In some embodiments, the communication module 204 may also be configured to communicate between internal components of the processing server 102 and external components of the processing server 102, such as externally connected databases, display devices, input devices, etc. The processing server 102 may also include a processing device. The processing device may be configured to perform the functions of the processing server 102 discussed herein as will be apparent to persons having skill in the relevant art. In some embodiments, the processing device may include and/or be comprised of a plurality of engines and/or modules specially configured to perform one or more functions of the processing device, such as a querying module 218, generation module 220, transaction processing module 222, etc. As used herein, the term "module" may be software or hardware particularly programmed to receive an input, perform one or more processes using the input, and provides an output. The input, output, and processes performed by various modules will be apparent to one skilled in the art based upon the present disclosure.

The processing server 102 may include a querying module 218. The querying module 218 may be configured to execute queries on databases to identify information. The querying module 218 may receive one or more data values or query strings, and may execute a query string based thereon on an indicated database, such as a memory 226, to identify information stored therein. The querying module 218 may then output the identified information to an appropriate engine or module of the processing server 102 as necessary. The querying module 218 may, for example, execute a query on the memory 226 to identify additional sets of payment credentials that are to be used to share payments for an authorization request received from a merchant system 110, where the additional sets of payment credentials may be identified based on the first set of payment credentials included in the authorization request or a transaction identifier associated therewith.

The processing server 102 may also include a generation module 220. The generation module 220 may be configured to generate data for use by the processing server 102 in performing the functions discussed herein. The generation module 220 may receive instructions as input, may generate data based on the instructions, and may output the generated data to one or more modules of the processing server 102. For example, the generation module 220 may be configured to generate authorization requests for a shared payment transaction for each of the additional sets of payment credentials identified for the transaction. The generation module 220 may also be configured to generate or otherwise modify authorization responses and to generate any data used in the generation or identification of transaction messages, such as generating transaction identifiers for providing to computing devices 104 and sharer devices 106.

The processing server 102 may also include a transaction processing module 222. The transaction processing module 222 may be configured to perform functions associated with the processing of transactions as part of the processing server 102 as discussed herein. For example, the transaction processing module 222 may be configured to parse or format transaction messages as necessary, route authorization requests and responses, perform transmissions and received data using payment rails associated with a payment network 112, etc.

The processing server 102 may also include a transmitting device 224. The transmitting device 224 may be configured to transmit data over one or more networks via one or more network protocols. In some instances, the transmitting device 224 may be configured to transmit data to computing devices 104, sharer devices 106, issuing institutions 108, merchant systems 110, payment networks 112, and other entities via one or more communication methods, local area networks, wireless area networks, cellular communication, Bluetooth, radio frequency, the Internet, etc. In some embodiments, the transmitting device 224 may be comprised of multiple devices, such as different transmitting devices for transmitting data over different networks, such as a first transmitting device for transmitting data over a local area network and a second transmitting device for transmitting data via the Internet. The transmitting device 224 may electronically transmit data signals that have data superimposed that may be parsed by a receiving computing device. In some instances, the transmitting device 224 may include one or more modules for superimposing, encoding, or otherwise formatting data into data signals suitable for transmission.

The transmitting device 224 may be configured to electronically transmit data signals to computing devices 104 that may be superimposed or otherwise encoded with a transaction identifier or other data that may be used in the collection of sets of payment credentials for use in a future shared payment transaction. The transmitting device 224 may also be configured to electronically transmit data signals to computing devices 104 and sharer devices 106 that may be superimposed or otherwise encoded with notifications regarding authorization responses received for a shared payment transaction associated therewith, such as to inform the user of the approval or denial of their respective shared payment. The transmitting device 224 may also be configured to electronically transmit data signals to issuing institutions 108, merchant systems 110, and payment networks 112 that are superimposed or otherwise encoded with transaction messages including authorization requests and authorization responses for the processing of shared payment transactions using the methods discussed herein.

The processing server 102 may also include a memory 226. The memory 226 may be configured to store data for use by the processing server 102 in performing the functions discussed herein, such as public and private keys, symmetric keys, etc. The memory 226 may be configured to store data using suitable data formatting methods and schema and may be any suitable type of memory, such as read-only memory, random access memory, etc. The memory 226 may include, for example, encryption keys and algorithms, communication protocols and standards, data formatting standards and protocols, program code for modules and application programs of the processing device, and other data that may be suitable for use by the processing server 102 in the performance of the functions disclosed herein as will be apparent to persons having skill in the relevant art. In some embodiments, the memory 226 may be comprised of or may otherwise include a relational database that utilizes structured query language for the storage, identification, modifying, updating, accessing, etc. of structured data sets stored therein. The memory 226 may be configured to store, for example, transaction identifiers, sets of payment credentials, transaction data, generated authorization requests, received authorization responses, etc.

### First Process for Processing a Shared Payment Transaction

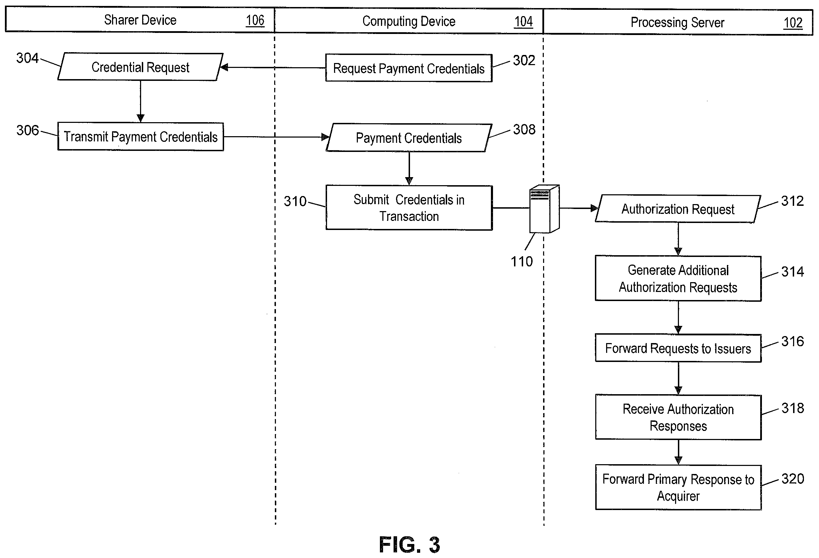

FIG. 3 illustrates an example process executed in the system 100 of FIG. 1 for the processing of a shared payment transaction where additional sets of payment credentials are included in the initial authorization request submitted for the shared payment transaction.

In step 302, the computing device 104 may request sets of payment credentials from one or more sharer devices 106. The request may be submitted through an application program executed by the computing device 104 and may utilize any suitable type of communication network and method. For instance, the computing device 104 and each sharer device 106 may include an electronic wallet application program that may be used for the storage and conveyance of payment credentials. In some cases, the request may be submitted via a separate application program, such as through the short messaging service or e-mail. In step 304, each sharer device 106 may receive the request for payment credentials. In some cases, the request may include transaction data specified by the primary consumer for the shared payment transaction, such as portioning data for the transaction amount. The sharer devices 106 may prompt their users to select payment credentials to respond to the request. In step 306, each of the sharer devices 106 may electronically transmit the selected sets of payment credentials to the computing device 104.

In step 308, the computing device 104 may receive the shared sets of payment credentials from each of the sharer devices 106. In step 310, the computing device 104 may submit its own first set of payment credentials as well as the received additional sets of payment credentials to a merchant system 110 as part of a payment transaction. In step 312, the receiving device 202 of the processing server 102 may receive an authorization request for the payment transaction. The authorization request may be submitted to the processing server 102 either directly or via the payment network 112 using payment rails associated therewith, and may be submitted by the merchant system 110 or by another entity on behalf of the merchant system 110, such as an acquiring institution or gateway processor. The authorization request may be a transaction message formatted according to one or more standards governing the interchange of financial transaction messages and include a plurality of data elements including a first data element configured to store a transaction amount, a second data element configured to store the first set of payment credentials, and one or more additional data elements configured to store the additional sets of payment credentials received from the sharer devices 106. In some cases, the authorization request may include an additional data element configured to store an indication that the payment transaction is to be a shared payment transaction.

In step 314, the generation module 220 of the processing server 102 may generate an additional authorization request for each of the additional sets of payment credentials parsed from the one or more additional data elements in the received initial authorization request. As part of step 314, the generation module 220 or transaction processing module 222 of the processing server 102 may modify the transaction amount in the initial authorization request and identify a separate amount for inclusion therein and in each of the additional authorization requests, where the separate amount may be based on the transaction amount and total number of payment credentials sharing the payment, and may be further based on any applicable portion rules or criteria.

In step 316, the transmitting device 224 of the processing server 102 may electronically transmit the generated authorization requests and the initial authorization request to issuing institutions 108 associated with the transaction accounts related to the respective payment credentials. In some cases, the transmission of the authorization requests to issuing institutions 108 may be performed in parallel, or may be sequential. In step 318, the receiving device 202 of the processing server 102 may receive an authorization response from each of the issuing institutions 108, where each authorization response may include a data element configured to store a response code indicating approval or denial of the respective portion of the shared payment transaction. In step 320, the transmitting device 224 of the processing server 102 may forward at least the authorization response for the initial authorization request, also referred to herein as the "primary authorization response" to an acquirer associated with the merchant system 110 for processing thereof. In cases where at least one authorization response indicates denial, the primary authorization response may be modified by the transaction processing module 222 before transmission to the acquirer to indicate that the payment transaction is denied, or to modify the transaction amount to account for the denial (e.g., as indicated by the computing device 104 or a sharer device 106).

### Second Process for Processing a Shared Payment Transaction

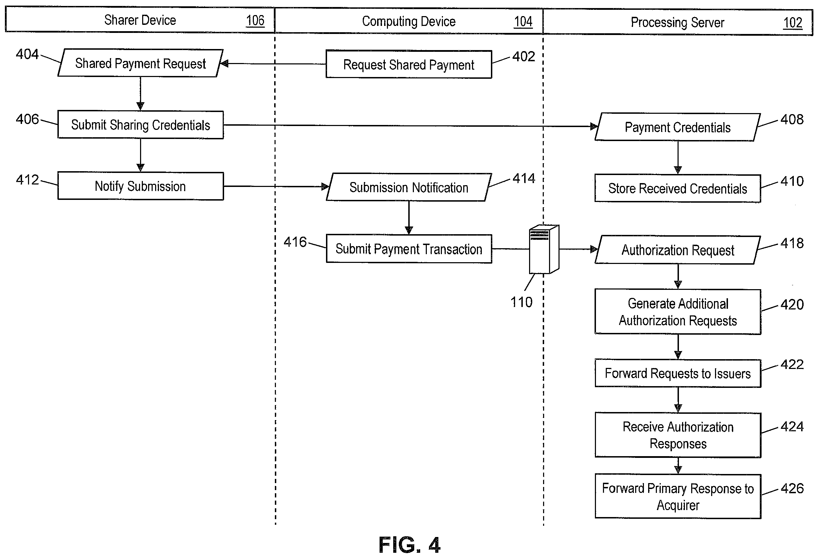

FIG. 4 illustrates an example process executed in the system 100 of FIG. 1 for the processing of a shared payment transaction where additional sets of payment credentials are registered with the processing server 102 prior to submission of the initial authorization request.

In step 402, the computing device 104 submits a request for a shared payment to each of the sharer devices 106. The request includes a transaction identifier. In other examples, the request may include other data used for association of submissions with the specific shared payment transaction. In such cases, the computing device 104 may first request a transaction identifier from the processing server 102, which may generate (e.g., via the generation module 220) or otherwise identify a transaction identifier and provide it thereto. The request may be submitted through an application program executed by the computing device 104 and may utilize any suitable type of communication network and method. For instance, the computing device 104 and each sharer device 106 may include an electronic wallet application program that may be used for the storage and conveyance of payment credentials. In some cases, the request may be submitted via a separate application program, such as through the short messaging service or e-mail. In step 404, each sharer device 106 receives the shared payment request. The sharer devices 106 prompt their users to select payment credentials to share in response to the request.

In step 406, each of the sharer devices 106 electronically transmit the selected sets of payment credentials to the processing server 102 using a suitable communication method. In step 408, the receiving device 202 of the processing server 102 receives the sets of payment credentials from each of the sharer devices 106. In some cases, each set of payment credentials may be accompanied by the transaction identifier or other identification data. In step 410, the querying module 218 of the processing server 102 may execute a query on the memory 226 of the processing server 102 to store the sets of payment credentials therein, which may be associated with the transaction identifier, if applicable.

In step 412, each sharer device 106 electronically transmits a notification to the computing device 104, informing the computing device 104 (e.g., or the primary consumer as a user thereof) that they have successfully registered their payment credentials for the shared payment transaction with the processing server 102. In step 414, the computing device 104 receives the notifications, and may display a message or other notification to the primary consumer that they are ready to proceed with the shared payment transaction. In embodiments, the computing device 104 transmits a notification to the processing server 102 to inform the processing server 102 of the future shared payment transaction. In some such embodiments, the notification may be performed prior to step 402, where the processing server 102 may provide the transaction identifier in response thereto.

In step 416, the computing device 104 submits its own first set of payment credentials to a merchant system 110 as part of a payment transaction. In step 418, the receiving device 202 of the processing server 102 receives an authorization request for the payment transaction. The authorization request may be submitted to the processing server 102 either directly or via the payment network 112 using payment rails associated therewith, and may be submitted by the merchant system 110 or by another entity on behalf of the merchant system 110, such as an acquiring institution or gateway processor. The authorization request may be a transaction message formatted according to one or more standards governing the interchange of financial transaction messages and include a plurality of data elements including a first data element configured to store a transaction amount, a second data element configured to store the first set of payment credentials. In some cases, the authorization request may include an additional data element configured to store an indication that the payment transaction is to be a shared payment transaction. In some such cases, the indication may include or be comprised of the transaction identifier.

In step 420, the generation module 220 of the processing server 102 identifies the additional sets of payment credentials for the shared payment transaction based on the transaction identifier or first set of payment credentials as previously registered with the processing server 102, and then generate an additional authorization request for each of the additional sets of payment credentials parsed from the one or more additional data elements in the received initial authorization request. As part of step 420, the generation module 220 or transaction processing module 222 of the processing server 102 may modify the transaction amount in the initial authorization request and identify a separate amount for inclusion therein and in each of the additional authorization requests, where the separate amount may be based on the transaction amount and total number of payment credentials sharing the payment, and may be further based on any applicable portion rules or criteria.

In step 422, the transmitting device 224 of the processing server 102 electronically transmits the generated authorization requests and the initial authorization request to issuing institutions 108 associated with the transaction accounts related to the respective payment credentials. In some cases, the transmission of the authorization requests to issuing institutions 108 may be performed in parallel, or may be sequential. In step 424, the receiving device 202 of the processing server 102 receives an authorization response from each of the issuing institutions 108, where each authorization response includes a data element configured to store a response code indicating approval or denial of the respective portion of the shared payment transaction. In step 426, the transmitting device 224 of the processing server 102 may forward at least the primary authorization response to an acquirer associated with the merchant system 110 for processing thereof. In cases where at least one authorization response indicates denial, the primary authorization response may be modified by the transaction processing module 222 before transmission to the acquirer to indicate that the payment transaction is denied, or to modify the transaction amount to account for the denial (e.g., as indicated by the computing device 106 or by a sharer device 108).

### Exemplary Method for Processing Shared Payments for a Transaction

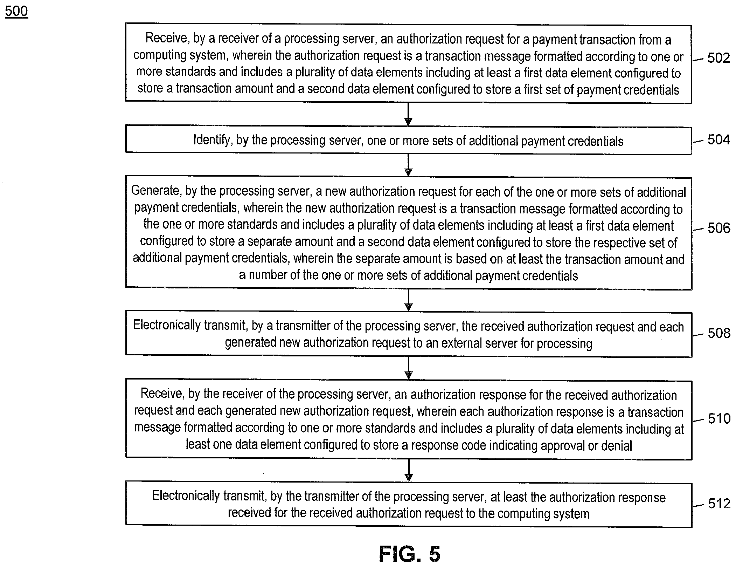

FIG. 5 illustrates a method 500 for the processing of shared payments for an electronic payment transaction through the use of multiple sets of payment credentials for a single, initially submitted authorization request from a merchant system.

In step 502, an authorization request for a payment transaction is received by a receiver (e.g., the receiving device 202) of a processing server (e.g., the processing server 102) from a computing system (e.g., the merchant system 110, payment network 112, etc.), wherein the authorization request is a transaction message formatted according to one or more standards and includes a plurality of data elements including at least a first data element configured to store a transaction amount and a second data element configured to store a first set of payment credentials. In step 504, one or more sets of additional payment credentials is identified by the processing server.

In step 506, a new authorization request is generated by the processing server for each of the one or more sets of additional payment credentials, wherein the new authorization request is a transaction message formatted according to the one or more standards and includes a plurality of data elements including at least a first data element configured to store a separate amount and a second data element configured to store the respective set of additional payment credentials, wherein the separate amount is based on at least the transaction amount and a number of the one or more sets of additional payment credentials. In step 508, the received authorization request and each generated new authorization request is electronically transmitted by a transmitter (e.g., the transmitting device 224) of the processing server to an external server (e.g., issuing institutions 108, the payment network 112, etc.) for processing.

In step 510, an authorization response for the received authorization request and each generated new authorization request is received by the receiver of the processing server, wherein each authorization response is a transaction message formatted according to one or more standards and includes a plurality of data elements including at least one data element configured to store a response code indicating approval or denial. In step 512, at least the authorization response received for the received authorization request is electronically transmitted by the transmitter of the processing server to the computing system.

In one embodiment, the plurality of data elements included in the received authorization request may further include a third data element configured to store an indication of the payment transaction as a shared payment transaction. In some embodiments, the one or more sets of additional payment credentials is stored in one or more additional data elements of the plurality of data elements included in the received authorization request. In a further embodiment, each of the one or more additional data elements may be reserved from private use according to the one or more standards.

In one embodiment, identifying the one or more sets of additional payment credentials may include executing a query on a memory (e.g., the memory 226) of the processing server to identify each of the one or more sets of additional payment credentials as associated with the first set of payment credentials in the memory. In a further embodiment, the method 500 may further include receiving, by the receiver of the processing server, each of the one or more sets of additional payment credentials from a computing device; and storing, in the memory of the processing server, each of the one or more sets of additional payment credentials following receipt. In some embodiments, the method 500 may also include electronically transmitting, by the transmitter of the processing server, each authorization response received for each generated new authorization request to the computing system. In one embodiment, at least one of the authorization responses received for each generated new authorization request may include a response code indicating denial, and the response code included in the authorization response received for the received authorization request may be updated by the processing server to indicate denial prior to electronic transmission of the authorization response.

### Computer System Architecture

FIG. 6 illustrates a computer system 600 in which embodiments of the present disclosure, or portions thereof, may be implemented as computer-readable code. For example, the processing server 102 of FIG. 1 may be implemented in the computer system 600 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 3-5.

If programmable logic is used, such logic may execute on a commercially available processing platform configured by executable software code to become a specific purpose computer or a special purpose device (e.g., programmable logic array, application-specific integrated circuit, etc.). A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor unit or device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 618, a removable storage unit 622, and a hard disk installed in hard disk drive 612.

Various embodiments of the present disclosure are described in terms of this example computer system 600. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

Processor device 604 may be a special purpose or a general purpose processor device specifically configured to perform the functions discussed herein. The processor device 604 may be connected to a communications infrastructure 606, such as a bus, message queue, network, multi-core message-passing scheme, etc. The network may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 600 may also include a main memory 608 (e.g., random access memory, read-only memory, etc.), and may also include a secondary memory 610. The secondary memory 610 may include the hard disk drive 612 and a removable storage drive 614, such as a floppy disk drive, a magnetic tape drive, an optical disk drive, a flash memory, etc.

The removable storage drive 614 may read from and/or write to the removable storage unit 618 in a well-known manner. The removable storage unit 618 may include a removable storage media that may be read by and written to by the removable storage drive 614. For example, if the removable storage drive 614 is a floppy disk drive or universal serial bus port, the removable storage unit 618 may be a floppy disk or portable flash drive, respectively. In one embodiment, the removable storage unit 618 may be non-transitory computer readable recording media.

In some embodiments, the secondary memory 610 may include alternative means for allowing computer programs or other instructions to be loaded into the computer system 600, for example, the removable storage unit 622 and an interface 620. Examples of such means may include a program cartridge and cartridge interface (e.g., as found in video game systems), a removable memory chip (e.g., EEPROM, PROM, etc.) and associated socket, and other removable storage units 622 and interfaces 620 as will be apparent to persons having skill in the relevant art.

Data stored in the computer system 600 (e.g., in the main memory 608 and/or the secondary memory 610) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 600 may also include a communications interface 624. The communications interface 624 may be configured to allow software and data to be transferred between the computer system 600 and external devices. Exemplary communications interfaces 624 may include a modem, a network interface (e.g., an Ethernet card), a communications port, a PCMCIA slot and card, etc. Software and data transferred via the communications interface 624 may be in the form of signals, which may be electronic, electromagnetic, optical, or other signals as will be apparent to persons having skill in the relevant art. The signals may travel via a communications path 626, which may be configured to carry the signals and may be implemented using wire, cable, fiber optics, a phone line, a cellular phone link, a radio frequency link, etc.

The computer system 600 may further include a display interface 602. The display interface 602 may be configured to allow data to be transferred between the computer system 600 and external display 630. Exemplary display interfaces 602 may include high-definition multimedia interface (HDMI), digital visual interface (DVI), video graphics array (VGA), etc. The display 630 may be any suitable type of display for displaying data transmitted via the display interface 602 of the computer system 600, including a cathode ray tube (CRT) display, liquid crystal display (LCD), light-emitting diode (LED) display, capacitive touch display, thin-film transistor (TFT) display, etc.

Computer program medium and computer usable medium may refer to memories, such as the main memory 608 and secondary memory 610, which may be memory semiconductors (e.g., DRAMs, etc.). These computer program products may be means for providing software to the computer system 600. Computer programs (e.g., computer control logic) may be stored in the main memory 608 and/or the secondary memory 610. Computer programs may also be received via the communications interface 624. Such computer programs, when executed, may enable computer system 600 to implement the present methods as discussed herein. In particular, the computer programs, when executed, may enable processor device 604 to implement the methods illustrated by FIGS. 3-5, as discussed herein. Accordingly, such computer programs may represent controllers of the computer system 600. Where the present disclosure is implemented using software, the software may be stored in a computer program product and loaded into the computer system 600 using the removable storage drive 614, interface 620, and hard disk drive 612, or communications interface 624.

The processor device 604 may comprise one or more modules or engines configured to perform the functions of the computer system 600. Each of the modules or engines may be implemented using hardware and, in some instances, may also utilize software, such as corresponding to program code and/or programs stored in the main memory 608 or secondary memory 610. In such instances, program code may be compiled by the processor device 604 (e.g., by a compiling module or engine) prior to execution by the hardware of the computer system 600. For example, the program code may be source code written in a programming language that is translated into a lower level language, such as assembly language or machine code, for execution by the processor device 604 and/or any additional hardware components of the computer system 600. The process of compiling may include the use of lexical analysis, preprocessing, parsing, semantic analysis, syntax-directed translation, code generation, code optimization, and any other techniques that may be suitable for translation of program code into a lower level language suitable for controlling the computer system 600 to perform the functions disclosed herein. It will be apparent to persons having skill in the relevant art that such processes result in the computer system 600 being a specially configured computer system 600 uniquely programmed to perform the functions discussed above.

Techniques consistent with the present disclosure provide, among other features, systems and methods for processing shared payments for a transaction. While various exemplary embodiments of the disclosed system and method have been described above it should be understood that they have been presented for purposes of example only, not limitations.

## Claims

1. A method (500) for processing shared payments for a transaction, comprising:
transmitting, by a computing device (104) associated with a primary consumer, a notification to a processing server (102) to inform the processing server (102) of a payment transaction;
providing, by the processing server (102), a transaction identifier to the computing device (104) associated with the primary consumer in response to the notification informing the processing server (102) of the payment transaction;
submitting (402), by the computing device (104) associated with the primary consumer, a request for a shared payment to each of one or more sharer devices (106) each associated with an additional consumer, wherein the request includes the transaction identifier;
receiving (404), by each of the one or more sharer devices (106), the shared payment request;
prompting, by each of the one or more sharer devices (106), the respective additional consumer to select payment credentials in response to the shared payment request;
electronically transmitting (406), by each of the one or more sharer devices (106), the selected payment credentials accompanied by the transaction identifier to the processing server (102);
storing (410), by the processing server (102), the selected payment credentials, wherein the selected payment credentials are associated with the transaction identifier;
electronically transmitting (412), by each of the one or more sharer devices (106), a notification to the computing device (104) associated with the primary consumer informing the computing device (104) that the selected payment credentials have been registered with the processing server (102);
receiving (414), by the computing device (104) associated with the primary consumer, the notification from each of the one or more sharer devices (106);
submitting (416), by the computing device (104), a first set of payment credentials to a computing system (110) as part of the payment transaction;
receiving (418; 502), by a receiver (202) of the processing server (102), an authorization request for the payment transaction from the computing system (110), wherein the authorization request is a transaction message formatted according to ISO 8583 or ISO 20022 standards and includes a plurality of data elements including at least a first data element configured to store a transaction amount, a second data element configured to store the first set of payment credentials, and a third data element configured to store the transaction identifier;
identifying (420; 504), by the processing server (102), one or more sets of additional payment credentials based on the transaction identifier;
generating (420; 506), by the processing server (102), one or more new authorization requests for the one or more sets of additional payment credentials, wherein a new authorization request is a transaction message formatted according to ISO 8583 or ISO 20022 standards and includes a plurality of data elements including at least a first data element configured to store a separate amount and a second data element configured to store the respective set of additional payment credentials, wherein the separate amount is based on at least the transaction amount and a number of the one or more sets of additional payment credentials;
electronically transmitting (422; 508), by a transmitter (224) of the processing server (102), the received authorization request and the generated one or more new authorization requests to an external server for processing;
receiving (424; 510), by the receiver (202) of the processing server (102), an authorization response for the received authorization request and the generated one or more new authorization requests, wherein an authorization response is a transaction message formatted according to ISO 8583 or ISO 20022 standards and includes a plurality of data elements including at least one data element configured to store a response code indicating approval or denial; and
electronically transmitting (426; 512), by the transmitter (224) of the processing server (102), at least the authorization response received for the received authorization request to the computing system (110).

2. The method (500) of claim 1, wherein the one or more sets of additional payment credentials are stored in one or more additional data elements of the plurality of data elements included in the received authorization request.

3. The method (500) of claim 1, wherein each of the one or more additional data elements are reserved for private use according to ISO 8583 or ISO 20022 standards.

4. The method (500) of claim 1, wherein identifying the one or more sets of additional payment credentials includes executing a query on a memory (226) of the processing server (102) to identify each of the one or more sets of additional payment credentials as associated with the first set of payment credentials in the memory (226).

5. The method (500) of claim 4, further comprising:
receiving, by the receiver (202) of the processing server (102), each of the one or more sets of additional payment credentials from a computing device (104); and
storing, in the memory (226) of the processing server (102), each of the one or more sets of additional payment credentials following receipt.

6. The method (500) of claim 1, further comprising:
electronically transmitting, by the transmitter (224) of the processing server (102), the authorization response received for the generated one or more new authorization requests to the computing system (110).

7. The method (500) of claim 1, wherein
at least one of the authorization responses received for the generated one or more new authorization requests includes a response code indicating denial, and
the response code included in the authorization response received for the received authorization request is updated by the processing server (102) to indicate denial prior to electronic transmission of the authorization response.

8. A system (100) for processing shared payments for a transaction, comprising:
a computing device (104) associated with a primary consumer, wherein the computing device (104) is configured to transmit a notification to a processing server (102) to inform the processing server (102) of a payment transaction and submit a first set of payment credentials to a computing system (110) as part of the payment transaction, wherein the processing server (102) is configured to provide a transaction identifier to the computing device (104) associated with the primary consumer in response to the notification informing the processing server (102) of the payment transaction;
one or more sharer devices (106) each associated with an additional consumer, wherein the computing device (104) is configured to submit a request for a shared payment to each of the one or more sharer devices (106), wherein the request includes the transaction identifier, and each of the one or more sharer devices (106) is configured to receive the shared payment request and prompt the respective additional consumer to select payment credentials in response to the shared payment request, wherein each of the one or more sharer devices (106) is configured to electronically transmit the selected payment credentials accompanied by the transaction identifier to the processing server (102) and electronically transmit a notification to the computing device (104) associated with the primary consumer informing the computing device (104) that the selected payment credentials have been registered with the processing server (102), wherein the computing device (104) is configured to receive the notification from each of the one or more sharer devices (106);
a transmitter (224) of the processing server (102); and
a receiver (202) of the processing server (102) configured to receive an authorization request for the payment transaction from the computing system (110), wherein the authorization request is a transaction message formatted according to ISO 8583 or ISO 20022 standards and includes a plurality of data elements including at least a first data element configured to store a transaction amount, a second data element configured to store the first set of payment credentials, and a third data element configured to store the transaction identifier, wherein
the processing server (102) is configured to
store the selected payment credentials, wherein the selected payment credentials are associated with the transaction identifier;
identify one or more sets of additional payment credentials based on the transaction identifier, and
generate a new authorization request for one or more of the one or more sets of additional payment credentials, wherein the new authorization request is a transaction message formatted according to ISO 8583 or ISO 20022 standards and includes a plurality of data elements including at least a first data element configured to store a separate amount and a second data element configured to store the respective set of additional payment credentials, wherein the separate amount is based on at least the transaction amount and a number of the one or more sets of additional payment credentials,
the transmitter (224) of the processing server (102) is configured to electronically transmit the received authorization request and the generated one or more new authorization requests to an external server for processing,
the receiver (202) of the processing server (102) is further configured to receive an authorization response for the received authorization request and the generated one or more new authorization requests, wherein an authorization response is a transaction message formatted according to ISO 8583 or ISO 20022 standards and includes a plurality of data elements including at least one data element configured to store a response code indicating approval or denial, and
the transmitter (224) of the processing server (102) is further configured to electronically transmit at least the authorization response received for the received authorization request to the computing system (110).

9. The system (100) of claim 8, wherein the one or more sets of additional payment credentials are stored in one or more additional data elements of the plurality of data elements included in the received authorization request.

10. The system (100) of claim 9, wherein each of the one or more additional data elements are reserved for private use according to ISO 8583 or ISO 20022 standards.

11. The system (100) of claim 8, wherein identifying the one or more sets of additional payment credentials includes executing a query on a memory (226) of the processing server (102) to identify each of the one or more sets of additional payment credentials as associated with the first set of payment credentials in the memory (226).

12. The system (100) of claim 11, further comprising:
the receiver (202) of the processing server (102) is further configured to receive each of the one or more sets of additional payment credentials from a computing device (104), and
the memory (226) of the processing server (102) is configured to store each of the one or more sets of additional payment credentials following receipt.

13. The system (100) of claim 8, wherein:
a) the transmitter (224) of the processing server (102) is further configured to electronically transmit the authorization response received for the generated one or more new authorization requests to the computing system (110); or
b) at least one of the authorization responses received for the generated one or more new authorization requests includes a response code indicating denial, and
the response code included in the authorization response received for the received authorization request is updated by the processing server (102) to indicate denial prior to electronic transmission of the authorization response.

## Patentansprüche

1. Verfahren (500) zum Verarbeiten gemeinsamer Zahlungen für eine Transaktion, Folgendes umfassend:
Übertragen, durch eine Computervorrichtung (104), die einem primären Verbraucher zugeordnet ist, einer Benachrichtigung an einen Verarbeitungsserver (102), um den Verarbeitungsserver (102) über eine Zahlungstransaktion zu informieren;
Bereitstellen, durch den Verarbeitungsserver (102), einer Transaktionskennung an die Computervorrichtung (104), die dem primären Verbraucher zugeordnet ist, als Reaktion auf die Benachrichtigung, die den Verarbeitungsserver (102) über die Zahlungstransaktion informiert;
Übermitteln (402), durch die Computervorrichtung (104), die dem primären Verbraucher zugeordnet ist, einer Anforderung für eine gemeinsame Zahlung an jede von einer oder mehreren Sharer-Vorrichtungen (106), die jeweils einem zusätzlichen Verbraucher zugeordnet sind, wobei die Anforderung die Transaktionskennung beinhaltet;
Empfangen (404), durch jede der einen oder mehreren Sharer-Vorrichtungen (106), der gemeinsamen Zahlungsanforderung;
Auffordern, durch jede der einen oder mehreren Sharer-Vorrichtungen (106), des jeweiligen zusätzlichen Verbrauchers, als Reaktion auf die gemeinsame Zahlungsanforderung Zahlungsinformationen auszuwählen;
elektronisches Übertragen (406), durch jedes der einen oder mehreren Sharer-Vorrichtungen (106), der ausgewählten Zahlungsinformationen zusammen mit der Transaktionskennung an den Verarbeitungsserver (102),
Speichern (410), durch den Verarbeitungsserver (102), der ausgewählten Zahlungsinformationen, wobei die ausgewählten Zahlungsinformationen der Transaktionskennung zugeordnet sind;
elektronisches Übertragen (412), durch jede der einen oder mehreren Sharer-Vorrichtungen (106), einer Benachrichtigung an die Computervorrichtung (104), die dem primären Verbraucher zugeordnet ist, um die Computervorrichtung (104) darüber zu informieren, dass die ausgewählten Zahlungsinformationen bei dem Verarbeitungsserver (102) registriert wurden;
Empfangen (414), durch die Computervorrichtung (104), die dem primären Verbraucher zugeordnet ist, der Benachrichtigung von jeder der einen oder mehreren Sharer-Vorrichtungen (106);
Übermitteln (416), durch die Computervorrichtung (104), eines ersten Satzes von Zahlungsinformationen an ein Computersystem (110) als Teil der Zahlungstransaktion;
Empfangen (418; 502), durch einen Empfänger (202) des Verarbeitungsservers (102), einer Autorisierungsanforderung für die Zahlungstransaktion von dem Computersystem (110), wobei die Autorisierungsanforderung eine Transaktionsnachricht ist, die gemäß ISO-8583- oder ISO-20022-Standards formatiert ist und eine Vielzahl von Datenelementen beinhaltet, einschließlich mindestens eines ersten Datenelements, das zum Speichern eines Transaktionsbetrags konfiguriert ist, eines zweiten Datenelements, das zum Speichern des ersten Satzes von Zahlungsinformationen konfiguriert ist, und eines dritten Datenelements, das zum Speichern der Transaktionskennung konfiguriert ist;
Identifizieren (420; 504), durch den Verarbeitungsserver (102), eines oder mehrerer Sätze zusätzlicher Zahlungsinformationen basierend auf der Transaktionskennung;
Erzeugen (420; 506), durch den Verarbeitungsserver (102), einer oder mehrerer neuer Autorisierungsanforderungen für den einen oder die mehreren Sätze zusätzlicher Zahlungsinformationen, wobei eine neue Autorisierungsanforderung eine Transaktionsnachricht ist, die gemäß ISO-8583- oder ISO-20022-Standards formatiert ist und eine Vielzahl von Datenelementen beinhaltet, einschließlich mindestens eines ersten Datenelements, das zum Speichern eines separaten Betrags konfiguriert ist, und eines zweiten Datenelements, das zum Speichern des jeweiligen Satzes zusätzlicher Zahlungsinformationen konfiguriert ist, wobei der separate Betrag auf mindestens dem Transaktionsbetrag und einer Anzahl des einen oder der mehreren Sätze zusätzlicher Zahlungsinformationen basiert;
elektronisches Übertragen (422; 508), durch einen Sender (224) des Verarbeitungsservers (102), der empfangenen Autorisierungsanforderung und der erzeugten einen oder mehreren neuen Autorisierungsanforderungen an einen externen Server zur Verarbeitung;
Empfangen (424; 510), durch den Empfänger (202) des Verarbeitungsservers (102), einer Autorisierungsantwort für die empfangene Autorisierungsanforderung und die erzeugten eine oder mehreren neuen Autorisierungsanforderungen, wobei eine Autorisierungsantwort eine Transaktionsnachricht ist, die gemäß ISO-8583- oder ISO-20022-Standards formatiert ist und eine Vielzahl von Datenelementen beinhaltet, einschließlich mindestens eines Datenelements, das zum Speichern eines Antwortcodes konfiguriert ist, der die Genehmigung oder Ablehnung anzeigt; und
elektronisches Übertragen (426; 512), durch den Sender (224) des Verarbeitungsservers (102), mindestens der für die empfangene Autorisierungsanforderung empfangenen Autorisierungsantwort an das Computersystem (110).

2. Verfahren (500) nach Anspruch 1, wobei der eine oder die mehreren Sätze zusätzlicher Zahlungsinformationen in einem oder mehreren zusätzlichen Datenelementen der Vielzahl von Datenelementen gespeichert sind, die in der empfangenen Autorisierungsanforderung beinhaltet sind.

3. Verfahren (500) nach Anspruch 1, wobei jedes der einen oder mehreren zusätzlichen Datenelemente für den privaten Gebrauch gemäß ISO-8583- oder ISO-20022-Standards reserviert ist.

4. Verfahren (500) nach Anspruch 1, wobei das Identifizieren des einen oder der mehreren Sätze zusätzlicher Zahlungsinformationen das Ausführen einer Abfrage auf einem Speicher (226) des Verarbeitungsservers (102) beinhaltet, um jeden des einen oder der mehreren Sätze zusätzlicher Zahlungsinformationen als dem ersten Satz zusätzlicher Zahlungsinformationen in dem Speicher (226) zugeordnet zu identifizieren.

5. Verfahren (500) nach Anspruch 4, ferner Folgendes umfassend:
Empfangen, durch den Empfänger (202) des Verarbeitungsservers (102), jedes des einen oder der mehreren Sätze zusätzlicher Zahlungsinformationen von einer Computervorrichtung (104); und
Speichern, in dem Speicher (226) des Verarbeitungsservers (102), jedes des einen oder der mehreren Sätze zusätzlicher Zahlungsinformationen nach dem Empfangen.

6. Verfahren (500) nach Anspruch 1, ferner Folgendes umfassend:
elektronisches Übertragen, durch den Sender (224) des Verarbeitungsservers (102), der Autorisierungsantwort, die für die erzeugten eine oder mehreren neuen Autorisierungsanforderungen empfangen wurde, an das Computersystem (110).

7. Verfahren (500) nach Anspruch 1, wobei
mindestens eine der für die erzeugten eine oder mehreren neuen Autorisierungsanforderungen empfangenen Autorisierungsantworten einen Antwortcode beinhaltet, der eine Ablehnung anzeigt, und
der Antwortcode, der in der empfangenen Autorisierungsantwort für die empfangene Autorisierungsanforderung beinhaltet ist, durch den Verarbeitungsserver (102) aktualisiert wird, um vor der elektronischen Übertragung der Autorisierungsantwort eine Ablehnung anzuzeigen.

8. System (100) zum Verarbeiten gemeinsamer Zahlungen für eine Transaktion, Folgendes umfassend:
eine Computervorrichtung (104), die einem primären Verbraucher zugeordnet ist, wobei die Computervorrichtung (104) konfiguriert ist, eine Benachrichtigung an einen Verarbeitungsserver (102) zu übertragen, um den Verarbeitungsserver (102) über eine Zahlungstransaktion zu informieren, und einen ersten Satz von Zahlungsinformationen als Teil der Zahlungstransaktion an ein Computersystem (110) zu übermitteln, wobei der Verarbeitungsserver (102) konfiguriert ist, um der Computervorrichtung (104), die dem primären Verbraucher zugeordnet ist, als Reaktion auf die Benachrichtigung, die den Verarbeitungsserver (102) über die Zahlungstransaktion informiert, eine Transaktionskennung bereitzustellen;
eine oder mehrere Sharer-Vorrichtungen (106), die jeweils einem zusätzlichen Verbraucher zugeordnet sind, wobei die Computervorrichtung (104) konfiguriert ist, eine Anforderung für eine gemeinsame Zahlung an jede der einen oder mehreren Sharer-Vorrichtungen (106) zu übermitteln, wobei die Anforderung die Transaktionskennung beinhaltet und jede der einen oder mehreren Sharer-Vorrichtungen (106) konfiguriert ist, die gemeinsame Zahlungsanforderung zu empfangen und den jeweiligen zusätzlichen Verbraucher aufzufordern, als Reaktion auf die gemeinsame Zahlungsanforderung Zahlungsinformationen auszuwählen, wobei jede der einen oder mehreren Sharer-Vorrichtungen (106) konfiguriert ist, die ausgewählten Zahlungsinformationen zusammen mit der Transaktionskennung elektronisch an den Verarbeitungsserver (102) zu übertragen und eine Benachrichtigung, die die Computervorrichtung (104) darüber informiert, dass die ausgewählten Zahlungsinformationen bei dem Verarbeitungsserver (102) registriert wurden, elektronisch an die dem primären Verbraucher zugeordnete Computervorrichtung (104) zu übertragen, wobei die Computervorrichtung (104) konfiguriert ist, die Benachrichtigung von jeder der einen oder mehreren Sharer-Vorrichtungen (106) zu empfangen;
einen Sender (224) des Verarbeitungsservers (102); und
einen Empfänger (202) des Verarbeitungsservers (102), der konfiguriert ist, um eine Autorisierungsanforderung für die Zahlungstransaktion von dem Computersystem (110) zu empfangen, wobei die Autorisierungsanforderung eine Transaktionsnachricht ist, die gemäß ISO-8583- oder ISO-20022-Standards formatiert ist und eine Vielzahl von Datenelementen beinhaltet, einschließlich mindestens eines ersten Datenelements, das zum Speichern eines Transaktionsbetrags konfiguriert ist, eines zweiten Datenelements, das zum Speichern des ersten Satzes von Zahlungsinformationen konfiguriert ist, und eines dritten Datenelements, das zum Speichern der Transaktionskennung konfiguriert ist, wobei
der Verarbeitungsserver (102) konfiguriert ist,
die ausgewählten Zahlungsinformationen zu speichern, wobei die ausgewählten Zahlungsinformationen der Transaktionskennung zugeordnet sind;
einen oder mehrere Sätze zusätzlicher Zahlungsinformationen basierend auf der Transaktionskennung zu identifizieren und
eine neue Autorisierungsanforderung für einen oder mehrere der einen oder mehreren Sätze zusätzlicher Zahlungsinformationen zu erzeugen, wobei die neue Autorisierungsanforderung eine Transaktionsnachricht ist, die gemäß ISO-8583- oder ISO-20022-Standards formatiert ist und eine Vielzahl von Datenelementen beinhaltet, einschließlich mindestens eines ersten Datenelements, das zum Speichern eines separaten Betrags konfiguriert ist, und eines zweiten Datenelements, das zum Speichern des jeweiligen Satzes zusätzlicher Zahlungsinformationen konfiguriert ist, wobei der separate Betrag auf mindestens dem Transaktionsbetrag und einer Anzahl des einen oder der mehreren Sätze zusätzlicher Zahlungsinformationen basiert,
der Sender (224) des Verarbeitungsservers (102) konfiguriert ist, die empfangene Autorisierungsanforderung und die erzeugten eine oder mehreren neuen Autorisierungsanforderungen elektronisch an einen externen Server zur Verarbeitung zu übertragen,
der Empfänger (202) des Verarbeitungsservers (102) ferner konfiguriert ist, eine Autorisierungsantwort für die empfangene Autorisierungsanforderung und die erzeugten eine oder mehreren neuen Autorisierungsanforderungen zu empfangen, wobei eine Autorisierungsantwort eine Transaktionsnachricht ist, die gemäß ISO-8583- oder ISO-20022-Standards formatiert ist und eine Vielzahl von Datenelementen beinhaltet, einschließlich mindestens eines Datenelements, das zum Speichern eines Antwortcodes konfiguriert ist, der die Genehmigung oder Ablehnung anzeigt, und
der Sender (224) des Verarbeitungsservers (102) ferner konfiguriert ist, mindestens die für die empfangene Autorisierungsanfrage empfangene Autorisierungsantwort elektronisch an das Computersystem (110) zu übertragen.

9. System (100) nach Anspruch 8, wobei der eine oder die mehreren Sätze zusätzlicher Zahlungsinformationen in einem oder mehreren zusätzlichen Datenelementen der Vielzahl von Datenelementen gespeichert sind, die in der empfangenen Autorisierungsanforderung beinhaltet sind.

10. System (100) nach Anspruch 9, wobei jedes der einen oder mehreren zusätzlichen Datenelemente gemäß ISO-8583- oder ISO-20022-Standards für den privaten Gebrauch reserviert ist.

11. System (100) nach Anspruch 8, wobei das Identifizieren des einen oder der mehreren Sätze zusätzlicher Zahlungsinformationen das Ausführen einer Abfrage auf einem Speicher (226) des Verarbeitungsservers (102) beinhaltet, um jeden des einen oder der mehreren Sätze zusätzlicher Zahlungsinformationen als dem ersten Satz zusätzlicher Zahlungsinformationen in dem Speicher (226) zugeordnet zu identifizieren.

12. System (100) nach Anspruch 11, ferner Folgendes umfassend:
der Empfänger (202) des Verarbeitungsservers (102) ist ferner konfiguriert, jeden des einen oder mehreren Sätze zusätzlicher Zahlungsinformationen von einer Computervorrichtung (104) zu empfangen, und
der Speicher (226) des Verarbeitungsservers (102) ist konfiguriert, jeden des einen oder mehreren Sätze zusätzlicher Zahlungsinformationen nach dem Empfangen zu speichern.

13. System (100) nach Anspruch 8, wobei:
a) der Sender (224) des Verarbeitungsservers (102) ferner konfiguriert ist, die für die erzeugte eine oder mehreren neuen Autorisierungsanforderungen empfangene Autorisierungsantwort elektronisch an das Computersystem (110) zu übertragen; oder
b) mindestens eine der für die erzeugten eine oder mehreren neuen Autorisierungsanforderungen empfangenen Autorisierungsantworten einen Antwortcode beinhaltet, der eine Ablehnung anzeigt, und
der Antwortcode, der in der empfangenen Autorisierungsantwort für die empfangene Autorisierungsanforderung beinhaltet ist, durch den Verarbeitungsserver (102) aktualisiert wird, um vor der elektronischen Übertragung der Autorisierungsantwort eine Ablehnung anzuzeigen.

## Revendications

1. Procédé (500) de traitement de paiements partagés pour une transaction, comprenant :
la transmission, par un dispositif informatique (104) associé à un consommateur principal, d'une notification à un serveur de traitement (102) pour informer le serveur de traitement (102) d'une transaction de paiement ;
la fourniture, par le serveur de traitement (102), d'un identifiant de transaction au dispositif informatique (104) associé au consommateur principal en réponse à la notification informant le serveur de traitement (102) de la transaction de paiement ;
l'envoi (402), par le dispositif informatique (104) associé au consommateur principal, d'une demande de paiement partagé à chacun d'un ou plusieurs dispositifs de partage (106) associés chacun à un consommateur supplémentaire, dans lequel la demande comporte l'identifiant de transaction ;
la réception (404), par chacun des un ou plusieurs dispositifs de partage (106), de la demande de paiement partagé ;
l'invitation, par chacun des un ou plusieurs dispositifs de partage (106), du consommateur supplémentaire respectif à sélectionner des justificatifs d'identité de paiement en réponse à la demande de paiement partagé ;
la transmission électronique (406), par chacun des un ou plusieurs dispositifs de partage (106), des justificatifs d'identité de paiement sélectionnés accompagnés de l'identifiant de transaction au serveur de traitement (102) ;
le stockage (410), par le serveur de traitement (102), des justificatifs d'identité de paiement sélectionnés, dans lequel les justificatifs d'identité de paiement sélectionnés sont associés à l'identifiant de transaction ;
la transmission électronique (412), par chacun des un ou plusieurs dispositifs de partage (106), d'une notification au dispositif informatique (104) associé au consommateur principal informant le dispositif informatique (104) que les justificatifs d'identité de paiement sélectionnés ont été enregistrés auprès du serveur de traitement (102) ;
la réception (414), par le dispositif informatique (104) associé au consommateur principal, de la notification provenant de chacun des un ou plusieurs dispositifs de partage (106) ;
l'envoi (416), par le dispositif informatique (104), d'un premier ensemble de justificatifs d'identité de paiement à un système informatique (110) dans le cadre de la transaction de paiement ;
la réception (418 ; 502), par un récepteur (202) du serveur de traitement (102), d'une demande d'autorisation pour la transaction de paiement provenant du système informatique (110), dans lequel la demande d'autorisation est un message de transaction formaté selon les normes ISO 8583 ou ISO 20022 et comporte une pluralité d'éléments de données comportant au moins un premier élément de données configuré pour stocker un montant de transaction, un deuxième élément de données configuré pour stocker le premier ensemble de justificatifs d'identité de paiement, et un troisième élément de données configuré pour stocker l'identifiant de transaction ;
l'identification (420 ; 504), par le serveur de traitement (102), d'un ou plusieurs ensembles de justificatifs d'identité de paiement supplémentaires sur la base de l'identifiant de transaction ;
la génération (420 ; 506), par le serveur de traitement (102), d'une ou plusieurs nouvelles demandes d'autorisation pour les un ou plusieurs ensembles de justificatifs d'identité de paiement supplémentaires, dans lequel une nouvelle demande d'autorisation est un message de transaction formaté selon les normes ISO 8583 ou ISO 20022 et comporte une pluralité d'éléments de données comportant au moins un premier élément de données configuré pour stocker un montant distinct et un deuxième élément de données configuré pour stocker l'ensemble respectif de justificatifs d'identité de paiement supplémentaires, dans lequel le montant distinct est basé sur au moins le montant de transaction et un nombre des un ou plusieurs ensembles de justificatifs d'identité de paiement supplémentaires ;
la transmission électronique (422 ; 508), par un émetteur (224) du serveur de traitement (102), de la demande d'autorisation reçue et des une ou plusieurs nouvelles demandes d'autorisation générées à un serveur externe pour traitement ;
la réception (424 ; 510), par le récepteur (202) du serveur de traitement (102), d'une réponse d'autorisation pour la demande d'autorisation reçue et les une ou plusieurs nouvelles demandes d'autorisation générées, dans lequel une réponse d'autorisation est un message de transaction formaté selon les normes ISO 8583 ou ISO 20022 et comporte une pluralité d'éléments de données comportant au moins un élément de données configuré pour stocker un code de réponse indiquant une approbation ou un refus ; et
la transmission électronique (426 ; 512), par l'émetteur (224) du serveur de traitement (102), d'au moins la réponse d'autorisation reçue pour la demande d'autorisation reçue au système informatique (110).

2. Procédé (500) selon la revendication 1, dans lequel les un ou plusieurs ensembles de justificatifs d'identité de paiement supplémentaires sont stockés dans un ou plusieurs éléments de données supplémentaires de la pluralité d'éléments de données inclus dans la demande d'autorisation reçue.

3. Procédé (500) selon la revendication 1, dans lequel chacun des un ou plusieurs éléments de données supplémentaires est réservé à un usage privé selon les normes ISO 8583 ou ISO 20022.

4. Procédé (500) selon la revendication 1, dans lequel l'identification des un ou plusieurs ensembles de justificatifs d'identité de paiement supplémentaires comporte l'exécution d'une requête sur une mémoire (226) du serveur de traitement (102) pour identifier chacun des un ou plusieurs ensembles de justificatifs d'identité de paiement supplémentaires associés au premier ensemble de justificatifs d'identité de paiement dans la mémoire (226) .

5. Procédé (500) selon la revendication 4, comprenant également :
la réception, par le récepteur (202) du serveur de traitement (102), de chacun des un ou plusieurs ensembles de justificatifs d'identité de paiement supplémentaires provenant d'un dispositif informatique (104) ; et
le stockage, dans la mémoire (226) du serveur de traitement (102), de chacun des un ou plusieurs ensembles de justificatifs d'identité de paiement supplémentaires après réception.

6. Procédé (500) selon la revendication 1, comprenant également :
la transmission électronique, par l'émetteur (224) du serveur de traitement (102), de la réponse d'autorisation reçue pour les une ou plusieurs nouvelles demandes d'autorisation générées au système informatique (110).

7. Procédé (500) selon la revendication 1, dans lequel
au moins l'une des réponses d'autorisation reçues pour les une ou plusieurs nouvelles demandes d'autorisation générées comporte un code de réponse indiquant un refus, et
le code de réponse inclus dans la réponse d'autorisation reçue pour la demande d'autorisation reçue est mis à jour par le serveur de traitement (102) pour indiquer un refus avant la transmission électronique de la réponse d'autorisation.

8. Système (100) de traitement de paiements partagés pour une transaction, comprenant :
un dispositif informatique (104) associé à un consommateur principal, dans lequel le dispositif informatique (104) est configuré pour transmettre une notification à un serveur de traitement (102) pour informer le serveur de traitement (102) d'une transaction de paiement et envoyer un premier ensemble de justificatifs d'identité de paiement à un système informatique (110) dans le cadre de la transaction de paiement, dans lequel le serveur de traitement (102) est configuré pour fournir un identifiant de transaction au dispositif informatique (104) associé au consommateur principal en réponse à la notification informant le serveur de traitement (102) de la transaction de paiement ;
un ou plusieurs dispositifs de partage (106) associés chacun à un consommateur supplémentaire, dans lequel le dispositif informatique (104) est configuré pour envoyer une demande de paiement partagé à chacun des un ou plusieurs dispositifs de partage (106), dans lequel la demande comporte l'identifiant de transaction, et chacun des un ou plusieurs dispositifs de partage (106) est configuré pour recevoir la demande de paiement partagé et inviter le consommateur supplémentaire respectif à sélectionner des justificatifs d'identité de paiement en réponse à la demande de paiement partagé, dans lequel chacun des un ou plusieurs dispositifs de partage (106) est configuré pour transmettre électroniquement les justificatifs d'identité de paiement sélectionnés accompagnés de l'identifiant de transaction au serveur de traitement (102) et transmettre électroniquement une notification au dispositif informatique (104) associé au consommateur principal informant le dispositif informatique (104) que les justificatifs d'identité de paiement sélectionnés ont été enregistrés auprès du serveur de traitement (102), dans lequel le dispositif informatique (104) est configuré pour recevoir la notification provenant de chacun des un ou plusieurs dispositifs de partage (106) ;
un émetteur (224) du serveur de traitement (102) ; et
un récepteur (202) du serveur de traitement (102) configuré pour recevoir une demande d'autorisation pour la transaction de paiement provenant du système informatique (110), dans lequel la demande d'autorisation est un message de transaction formaté selon les normes ISO 8583 ou ISO 20022 et comporte une pluralité d'éléments de données comportant au moins un premier élément de données configuré pour stocker un montant de transaction, un deuxième élément de données configuré pour stocker le premier ensemble de justificatifs d'identité de paiement, et un troisième élément de données configuré pour stocker l'identifiant de transaction, dans lequel
le serveur de traitement (102) est configuré pour
stocker les justificatifs d'identité de paiement sélectionnés, dans lequel les justificatifs d'identité de paiement sélectionnés sont associés à l'identifiant de transaction ;
identifier un ou plusieurs ensembles de justificatifs d'identité de paiement supplémentaires sur la base de l'identifiant de transaction, et
générer une nouvelle demande d'autorisation pour un ou plusieurs des un ou plusieurs ensembles de justificatifs d'identité de paiement supplémentaires, dans lequel la nouvelle demande d'autorisation est un message de transaction formaté selon les normes ISO 8583 ou ISO 20022 et comporte une pluralité d'éléments de données comportant au moins un premier élément de données configuré pour stocker un montant distinct et un deuxième élément de données configuré pour stocker l'ensemble respectif de justificatifs d'identité de paiement supplémentaires, dans lequel le montant distinct est basé sur au moins le montant de transaction et un nombre des un ou plusieurs ensembles de justificatifs d'identité de paiement supplémentaires,
l'émetteur (224) du serveur de traitement (102) est configuré pour transmettre électroniquement la demande d'autorisation reçue et les une ou plusieurs nouvelles demandes d'autorisation générées à un serveur externe pour traitement,
le récepteur (202) du serveur de traitement (102) est en outre configuré pour recevoir une réponse d'autorisation pour la demande d'autorisation reçue et les une ou plusieurs nouvelles demandes d'autorisation générées, dans lequel une réponse d'autorisation est un message de transaction formaté selon les normes ISO 8583 ou ISO 20022 et comporte une pluralité d'éléments de données comportant au moins un élément de données configuré pour stocker un code de réponse indiquant une approbation ou un refus, et
l'émetteur (224) du serveur de traitement (102) est en outre configuré pour transmettre électroniquement au moins la réponse d'autorisation reçue pour la demande d'autorisation reçue au système informatique (110).

9. Système (100) selon la revendication 8, dans lequel les un ou plusieurs ensembles de justificatifs d'identité de paiement supplémentaires sont stockés dans un ou plusieurs éléments de données supplémentaires de la pluralité d'éléments de données inclus dans la demande d'autorisation reçue.

10. Système (100) selon la revendication 9, dans lequel chacun des un ou plusieurs éléments de données supplémentaires est réservé à un usage privé selon les normes ISO 8583 ou ISO 20022.

11. Système (100) selon la revendication 8, dans lequel l'identification des un ou plusieurs ensembles de justificatifs d'identité de paiement supplémentaires comporte l'exécution d'une requête sur une mémoire (226) du serveur de traitement (102) pour identifier chacun des un ou plusieurs ensembles de justificatifs d'identité de paiement supplémentaires associés au premier ensemble de justificatifs d'identité de paiement dans la mémoire (226) .

12. Système (100) selon la revendication 11, comprenant également :
le récepteur (202) du serveur de traitement (102) est en outre configuré pour recevoir chacun des un ou plusieurs ensembles de justificatifs d'identité de paiement supplémentaires provenant d'un dispositif informatique (104), et
la mémoire (226) du serveur de traitement (102) est configurée pour stocker chacun des un ou plusieurs ensembles de justificatifs d'identité de paiement supplémentaires après réception.

13. Système (100) selon la revendication 8, dans lequel :
a) l'émetteur (224) du serveur de traitement (102) est en outre configuré pour transmettre électroniquement la réponse d'autorisation reçue pour les une ou plusieurs nouvelles demandes d'autorisation générées au système informatique (110) ; ou
b) au moins l'une des réponses d'autorisation reçues pour les une ou plusieurs nouvelles demandes d'autorisation générées comporte un code de réponse indiquant un refus, et
le code de réponse inclus dans la réponse d'autorisation reçue pour la demande d'autorisation reçue est mis à jour par le serveur de traitement (102) pour indiquer un refus avant la transmission électronique de la réponse d'autorisation.
